# EUROPÄISCHE PATENTSCHRIFT

(11) **EP 3 693 433 B1**
(45) Veröffentlichungstag und Bekanntmachung des Hinweises auf die Patenterteilung: **23.08.2023**
(21) Anmeldenummer: 20156124.8
(22) Anmeldetag: 07.02.2020
(51) Int. Cl.: C09J 7/38

(54) **UV-HÄRTBARES KLEBEBAND UND VERFAHREN ZUM UMMANTELN VON LANGESTRECKTEM GUT INSBESONDERE LEITUNGEN**
UV CURABLE ADHESIVE TAPE AND METHOD FOR COVERING ELONGATED PRODUCTS IN PARTICULAR CABLES
BANDE ADHÉSIVE DURCISSABLE AUX UV ET PROCÉDÉ DE GAINAGE DE PRODUITS ALLONGÉS, EN PARTICULIER CONDUITES

(30) Priorität: 08.02.2019 DE 102019103120
(43) Veröffentlichungstag der Anmeldung: 12.08.2020
(73) Patentinhaber: tesa SE, 22848 Norderstedt (DE)
(72) Erfinder: Klingeberg, Kerstin, 22527 Hamburg (DE); Guldbrandsen, Lars, 22885 Barsbüttel (DE); Simonis, Heike, 22299 Hamburg (DE); Wedel, Nadine, 22417 Hamburg (DE); Schuh, Christian, 22767 Hamburg (DE)
(74) Vertreter: tesa SE

(56) Entgegenhaltungen:
- WO-A1-2017/174303
- DE-A1-102017 001 696
- JP-A- H04 210 182
- US-A1- 2002 182 955

## Beschreibung

Die Erfindung betrifft ein Verfahren zum Ummanteln von langgestrecktem Gut, insbesondere Kabelsätzen.

Seit geraumer Zeit werden in der Industrie Klebebänder zur Herstellung von Kabelbäumen verwendet. Die Klebebebänder werden zum Bündeln einer Vielzahl von elektrischen Leitungen vor dem Einbau oder in bereits montiertem Zustand eingesetzt, um beispielsweise den Raumbedarf des Leitungsbündels durch Bandagieren zu reduzieren und zusätzlich Schutzfunktionen wie Schutz gegen mechanische und/oder thermische Beanspruchung zu erreichen. Gängige Formen von Klebebändern umfassen Folien- oder Textilträger, die in der Regel einseitig mit Haftklebemassen beschichtet sind. Klebebänder zum Ummanteln von langgestreckten Gütern sind beispielsweise aus der EP 1 848 006 A2, der DE 10 2013 213 726 A1, und der EP 2 497 805 A1 bekannt.

Derzeitige mit Klebeband umwickelte Kabelstränge sind in der Regel flexibel. Dies ist jedoch aus fertigungstechnischen Gründen oft unerwünscht. In der Fertigung werden die Kabelstränge in der Regel zu einem Kabelplan vorgefertigt und dann in das zu bestückende Objekt wie beispielsweise Automobile eingesetzt. Ein Kabelsatzplan entspricht der tatsächlichen räumlichen Anordnung der einzelnen Kabelstränge in dem Kabelsatz, also welcher Kabelstrang an welcher Stelle in welchem Winkel gebogen ist, wo sich Positionen von Abzweigen oder Ausbindungen befinden und mit welchen Steckern die Enden der Kabelstränge belegt sind.

Um die einzelnen Stränge des Kabelsatzes in einer bestimmten Form zu halten, so dass sie zum Beispiel im Motorraum um den Motor herumgeführt werden können, ohne mit dem Motor in Kontakt zu kommen, werden um den mit Klebeband umwickelten Kabelbaum üblicherweise nachträglich Spritzgussteile angebracht. Diese Spritzgussteile haben aber den Nachteil, dass ein zusätzlicher Material- und Montageaufwand anfällt.

In der WO 2015/004190 A1 wird ein Verfahren zum Ummanteln von langgestrecktem Gut wie insbesondere Leitungen oder Kabelsätzen offenbart, bei dem das langgestreckte Gut mit einem Klebeband mit darauf aufgebrachter aushärtbarer Klebemasse in einer Schraubenlinie oder in axialer Richtung umhüllt wird und die auf dem Klebeband aufgebrachte Klebemasse durch Zufuhr von Strahlungsenergie wie Wärme ausgehärtet wird. Zur thermischen Aushärtung wird dabei eine Temperatur von 175°C angewendet.

Nachteilig bei diesem Verfahren ist die hohe Aushärtungstemperatur, die bei der Montage von Kabelsträngen während des Fertigungsprozesses beispielsweise in der Automobilindustrie wenig praktikabel ist, insbesondere weil die oft aus PVC gefertigten Kabelisolierungen beschädigt werden können. Folglich werden bislang Kabelpläne nur in vorgefertigten Spritzgussformen verlegt. Dies ist mit hohem Fertigungsaufwand verbunden.

Daher sind Klebebänder wünschenswert, die bei höchstens 110°C, bevorzugt höchstens 100°C, weiter bevorzugt bei etwa Raumtemperatur aushärten, damit die Umhüllung von Klebebändern in den Fertigungsprozess der Kabelbäume bzw. Kabelpläne integriert werden kann. Die Klebebänder müssen nach dem Aushärten die geforderten Anforderungen an Formstabilität aufweisen. Andererseits dürfen die Klebemassen nicht schon bei der Lagerung aushärten, da sie ansonsten nicht mehr verwendbar sind. Schließlich soll die Aushärtung innerhalb der Taktzeit des Herstellungsprozesses (ca. 6 Min.) stattfinden.

Aufgabe der vorliegenden Erfindung ist es daher ein Verfahren zum Ummanteln von langgestrecktem Gut unter Verwendung des rigiden Klebebands zur Verfügung zu stellen.

Zur Lösung der technischen Probleme wird in dem Verfahren eine Benutzung eines Klebebands zum Ummanteln von langgestrecktem Gut vorgeschlagen, umfassend einen bandförmigen Träger, der auf mindestens einer Seite mit einer Klebeschicht versehen ist, die aus einem selbstklebenden Haftklebestoff besteht, **dadurch gekennzeichnet, dass** der selbstklebenden Haftklebestoff eine UV-härtbare Zusammensetzung ist, umfassend:
15 bis 50 Gewichtsteile, bevorzugt 20-40 Gewichtsteile Matrixpolymer;
50 bis 85, bevorzugt 60 bis 75 Gewichtsteile Epoxidharz;
0,1 bis 3 Gewichtsteile Photoinitiator, wobei das Matrixpolymer einen selbsttragenden Film bildet, in dem Epoxidharz und Photoinitiator eingebettet sind.

Gemäß einer Ausführungsform der Erfindung handelt es sich bei dem langgestreckten Gut um einen Kabelstrang, der ein Bündel aus mehreren Kabeln, wie 3 bis 1000 Kabeln, bevorzugt 10 bis 500 Kabeln, insbesondere zwischen 50 und 300 Kabeln umfasst.

Bevorzugt ist das Matrixpolymer ausgewählt aus der Gruppe bestehend aus Styrol-Copolymeren, Acrylat-Copolymeren, Methacrylat-Copolymeren, thermoplastischen Polyurethanen, Copolyestern, Copolyamiden und Ethylen-Vinylacetat-Copolymeren und Mischungen derselben.

Als **Epoxidharz**(e) der UV-härtbaren Zusammensetzung kann ein einziges Epoxidharz oder eine Mischung von Epoxidharzen eingesetzt werden. Grundsätzlich können bei Raumtemperatur flüssige Epoxidharze oder bei Raumtemperatur feste Epoxidharze oder Mischungen hiervon eingesetzt werden.

Beispiele, ohne sich einschränken zu wollen, sind 3,4-Epoxycyclohexylmethyl-3',4'-epoxycyclohexancarboxylat (EEC) und Derivate, Dicyclopentadiendioxid und Derivate, 3-Ethyl-3-oxetanmethanol und Derivate, Tetrahydrophthalsäurediglycidyl-ester und Derivate, Hexahydrophthalsäurediglycidylester und Derivate, 1,2-Ethandiglycidylether und Derivate, 1,3-Propandiglycidylether und Derivate, 1,4-Butandioldiglycidyl-ether und Derivate, höhere 1,n-Alkandiglycidylether und Derivate, Bis-[(3,4-epoxycyclohexyl)methyl]adipat und Derivate, Vinylcyclohexyldioxid und Derivate, 1,4-Cyclohexandimethanol-bis-(3,4-epoxycyclohexancarboxylat) und Derivate, 4,5-Epoxy-tetrahydrophthalsäurediglycidylester und Derivate, Bis-[1-ethyl(3-oxetanyl)methyl)ether und Derivate, Pentaery-thritoltetraglycidylether und Derivate, Bisphenol-A-Digylcidylether (DGEBA), hydriertes Bisphenol-A-Diglycidyl-ether, Bisphenol-F-Diglycidylether, hydriertes Bisphenol-F-Diglycidylether, Epoxyphenol-Novolaks, hydrierte Epoxyphenol-Novolak, Epoxycresol-Novolaks, hydrierte Epoxycresol-Novolaks, 2-(7-Oxabicyclo[4.1.0]hept-3-yl;Spiro[1,3-dioxane-5,3'-[7]oxabicyclo[4.1.0]-heptane], 1,4-Bis((2,3-epoxypropoxy)-methyl)cyclohexane.

Reaktivharze können in ihrer monomeren oder auch dimeren, trimeren, usw. bis hin zu ihrer oligomeren Form eingesetzt werden.

Vorzugsweise ist das eine Epoxidharz oder mindestens eines der Epoxidharze ein Feststoff; insbesondere ein solcher mit einer Erweichungstemperatur von mindestens 45°C oder ein solcher mit einer Viskosität bei 25°C von mindestens 20 Pa·s, bevorzugt mindestens 50 Pa·s, insbesondere mindestens 150 Pa·s (bestimmt nach DIN 53019-1 bei 25°C und einer von Schergeschwindigkeit 1 s⁻¹).

In einer bevorzugten Ausführung des Klebebandes umfassen die Epoxidharze eine Mischung von bei 25°C flüssigen und bei 25°C festen Epoxidharzen. Der Anteil der flüssigen Epoxidharze an den Epoxidharze (E) liegt insbesondere bei 10 bis 90 Gew.-%, weiter bevorzugt bei 20 bis 75 Gew.-%. Die jeweilige Differenz auf 100 Gew.-% der Epoxidharze ist dann durch feste Epoxidharze gegeben. Klebebänder mit solchen Verhältnissen aus flüssigen und festen Epoxid-Komponenten zeigen im unausgehärteten Zustand besonders ausgewogene Klebeigenschaften. Wird ein Klebeband mit besonders guten Auffließ-eigenschaften gewünscht, so ist der Anteil an flüssigen Epoxidkomponenten bevorzugt 50 bis 80 Gew.-%. Für Anwendungen, bei denen die Klebebänder bereits im unausgehärteten Zustand eine höhere Last tragen müssen, ist ein Anteil von 15 bis 45 Gew.-% besonders bevorzugt. Es kann ein solches Harz oder auch eine Mischung verschiedener Harze eingesetzt werden.

Weiter bevorzugt umfassen die Epoxidharze wenigstens zwei unterschiedliche Epoxidharze (E-1) und (E-2), von denen
a. das erste Epoxidharz (E-1) bei 25°C eine dynamische Viskosität von weniger als 500 Pa·s aufweist, gemessen nach DIN 53019-1 bei einer Messtemperatur von 25°C und einer Schergeschwindigkeit 1 s⁻¹, und
b. von denen das zweite Epoxidharz (E-2) eine Erweichungstemperatur von wenigstens 45°C oder bei 25°C eine dynamische Viskosität von wenigstens 1000 Pa·s aufweist, gemessen nach DIN 53019-1 bei einer Messtemperatur von 25°C und einer Schergeschwindigkeit 1 s⁻¹,
wobei insbesondere der Anteil des ersten Epoxidharzes (E-1) 10 bis 90 Gew.-%, bevorzugt 20 bis 75 Gew.-% und der Anteil des zweiten Epoxidharzes (E-2) 10 bis 90 Gew.-%, bevorzugt 25 bis 80 Gew.-% beträgt, bezogen auf die Gesamtheit an Epoxidharzen. Vorteilhaft besteht die Epoxidharz-Komponente aus diesen beiden Epoxidharze (E-1) und (E-2), so dass sich der Anteil der beiden Epoxidharze (E-1) und (E-2) am gesamten Epoxidharz zu 100 Gew.-% addieren.

Besonders gute Haftklebstoffe werden erhalten, wenn der Anteil von Epoxidharz (E2) im Bereich von 40 bis 80 Gew.-%, insbesondere 60 bis 75 Gew.-% ist. In einer speziellen Ausführungsform ist der Anteil an Epoxidharzen (E-2), die eine Erweichungstemperatur von wenigstens 45°C haben, mindestens 35 Gew.-%, insbesondere im Bereich 40 bis 70 Gew.-%.

Die Kohäsion der unvernetzten Haftklebstoffe bei trotzdem ausreichender Haftklebrigkeit ist besonders gut, wenn der Anteil an Epoxidharzen mit einer Erweichungstemperatur von wenigstens 45°C mindestens 15 Gew.-% beträgt, insbesondere im Bereich von 20 Gew.-% bis 75 Gew.-% liegt, bezogen auf das gesamte Epoxidharz. Das Auffließverhalten wird verbessert, wenn weniger als 55 Gew.-%, insbesondere zwischen 25 Gew.-% und 45 Gew.-% enthalten sind.

Die Klebmasseformulierung enthält zudem mindestens eine Sorte eines **Photoinitiators** für die kationische Härtung der Reaktivharze. Unter den Initiatoren für eine kationische UV-Härtung sind insbesondere Sulfonium, Iodonium und Metallocen basierende Systeme einsetzbar.

Als Beispiele für Sulfonium basierende Kationen sei auf die Ausführungen in US 6,908,722 B1 (insbesondere Spalten 10 bis 21) verwiesen.

Als Beispiele für Anionen, die als Gegenionen für die oben genannten Kationen dienen, seien Tetrafluorborat, Tetraphenylborat, Hexafluorphosphat, Perchlorat, Tetrachlor-ferrat, Hexafluorarsenat, Hexafluorantimonat, Pentafluorhy-droxyantimonat, Hexachlorantimonat, Tetrakispentafluorphenyl-borat, Tetrakis(pentafluormethylphenyl)borat, Bi-(trifluor-methylsulfonyl)amid und Tris-(trifluormethylsulfonyl)methid genannt. Ferner sind insbesondere für Iodonium-basierende Initiatoren auch Chlorid, Bromid oder Iodid als Anionen denkbar, wobei aber Initiatoren, die im Wesentlichen frei von Chlor und Brom sind, bevorzugt sind.

Beispielhaft zählen zu den einsetzbaren Systemen
Sulfonium-Salze (siehe zum Beispiel US 4,231,951 A, US 4,256,828 A, US 4,058,401 A, US 4,138,255 A und US 2010/063221 A1) wie
Triphenylsulfoniumhexafluoroarsenat, Triphenylsulfoniumhexafluoroborat, Triphenylsulfoniumtetrafluoroborat, Triphenylsulfoniumtetrakis-(pentafluorobenzyl)-borat, Methyldiphenylsulfoniumtetrafluoroborat, Methyldiphenylsulfoniumtetrakis-(pentafluorobenzyl)-borat, Dimethylphenylsulfoniumhexafluorophosphat, Triphenylsulfoniumhexafluorophosphat, Triphenylsulfoniumhexafluoroantimonat, Diphenylnaphthylsulfoniumhexafluoroarsenat, Tritolylsulfoniumhexafluorophosphat, Anisyldiphenylsulfoniumhexafluoroantimonat,
4-Butoxyphenyldiphenylsulfoniumtetrafluoroborat,
4-Butoxyphenyldiphenylsulfoniumtetrakis-(pentafluorobenzyl)-borat,
4-Chlorophenyldiphenylsulfoniumhexafluoroantimonat,
Tris-(4-phenoxyphenyl)-sulfoniumhexafluorophosphat,
Di-(4-ethoxyphenyl)-methylsulfoniumhexafluoroarsenat,
4-Acetylphenyldiphenylsulfoniumtetrafluoroborat,
4-Acetylphenyldiphenylsulfoniumtetrakis-(pentafluorobenzyl)-borat,
Tris-(4-thiomethoxyphenyl)-sulfoniumhexafluorophosphat, Di-(methoxysulfonylphenyl)-methylsulfoniumhexafluoroantimonat,
Di-(methoxynaphthyl)-methylsulfoniumtetrafluoroborat, Di-(methoxynaphthyl)-methylsulfoniumtetrakis-(pentafluorobenzyl)-borat,
Di-(carbomethoxyphenyl)-methylsulfoniumhexafluorophosphat, (4-Octyloxyphenyl)-diphenylsulfoniumtetrakis-(3,5-bis-trifluoromethylphenyl)-borat, Tris-[4-(4-acetylphenyl)-thiophenyl]-sulfoniumtetrakis-(pentafluorophenyl)-borat, Tris-(dodecylphenyl)-sulfoniumtetrakis-(3,5-bis-trifluoromethylphenyl)-borat,
4-Acetamidphenyldiphenylsulfoniumtetrafluoroborat, 4-Acetamidphenyldiphenylsulfoniumtetrakis-(pentafluorobenzyl)-borat, Dimethylnaphthylsulfoniumhexafluorophosphat, Trifluoromethyldiphenylsulfoniumtetrafluoroborat, Trifluoromethyldiphenylsulfoniumtetrakis-(pentafluorobenzyl)-borat, Phenylmethylbenzylsulfoniumhexafluorophosphat, 5-Methylthianthreniumhexafluorophosphat,
10-Phenyl-9,9-dimethylthioxantheniumhexafluorophosphat,
10-Phenyl-9-oxothioxantheniumtetrafluoroborat,
10-Phenyl-9-oxothioxantheniumtetrakis-(pentafluorobenzyl)-borat,
5-Methyl-10-oxothianthreniumtetrafluoroborat,
5-Methyl-10-oxothianthreniumtetrakis-(pentafluorobenzyl)-borat und
5-Methyl-10,10-dioxothianthreniumhexafluorophosphat,
Iodonium-Salze (siehe zum Beispiel US 3,729,313 A, US 3,741,769 A, US 4,250,053 A, US 4,394,403 A und US 2010/063221 A1) wie
Diphenyliodoniumtetrafluoroborat,
Di-(4-methylphenyl)-iodoniumtetrafluoroborat,
Phenyl-4-methylphenyliodoniumtetrafluoroborat,
Di-(4-chlorphenyl)-iodoniumhexafluorophosphat,
Dinaphthyliodoniumtetrafluoroborat,
Di-(4-trifluormethylphenyl)-iodoniumtetrafluoroborat,
Diphenyliodoniumhexafluorophosphat,
Di-(4-methylphenyl)-iodoniumhexafluorophosphat, Diphenyliodoniumhexafluoroarsenat,
Di-(4-phenoxyphenyl)-iodoniumtetrafluoroborat,
Phenyl-2-thienyliodoniumhexafluorophosphat,
3,5-Dimethylpyrazolyl-4-phenyliodoniumhexafluorophosphat,
Diphenyliodoniumhexafluoroantimonat,
2,2'-Diphenyliodoniumtetrafluoroborat,
Di-(2,4-dichlorphenyl)-iodoniumhexafluorophosphat,
Di-(4-bromphenyl)-iodoniumhexafluorophosphat,
Di-(4-methoxyphenyl)-iodoniumhexafluorophosphat,
Di-(3-carboxyphenyl)-iodoniumhexafluorophosphat,
Di-(3-methoxycarbonylphenyl)-iodoniumhexafluorophosphat,
Di-(3-methoxysulfonylphenyl)-iodoniumhexafluorophosphat,
Di-(4-acetamidophenyl)-iodoniumhexafluorophosphat,
Di-(2-benzothienyl)-iodoniumhexafluorophosphat,
Diaryliodoniumtristrifluormethylsulfonylmethid wie
Diphenyliodoniumhexafluoroantimonat,
Diaryliodoniumtetrakis-(pentafluorophenyl)-borat wie Diphenyliodoniumtetrakis-(pentafluorophenyl)-borat,
(4-n-Disiloxyphenyl)-phenyliodoniumhexafluoroantimonat,
[4-(2-Hydroxy-n-tetradesiloxy)-phenyl]-phenyliodoniumhexafluoroantimonat,
[4-(2-Hydroxy-n-tetradesiloxy)-phenyl]-phenyliodoniumtrifluorosulfonat,
[4-(2-Hydroxy-n-tetradesiloxy)-phenyl]-phenyliodoniumhexafluorophosphat,
[4-(2-Hydroxy-n-tetradesiloxy)-phenyl]-phenyliodoniumtetrakis-(pentafluorophenyl)-borat,
Bis-(4-tert-butylphenyl)-iodoniumhexafluoroantimonat,
Bis-(4-tert-butylphenyl)-iodoniumhexafluorophosphat,
Bis-(4-tert-butylphenyl)-iodoniumtrifluorosulfonat,
Bis-(4-tert-butylphenyl)-iodoniumtetrafluoroborat,
Bis-(dodecylphenyl)-iodoniumhexafluoroantimonat,
Bis-(dodecylphenyl)-iodoniumtetrafluoroborat,
Bis-(dodecylphenyl)-iodoniumhexafluorophosphat,
Bis-(dodecylphenyl)-iodoniumtrifluoromethylsulfonat,
Di-(dodecylphenyl)-iodoniumhexafluoroantimonat,
Di-(dodecylphenyl)-iodoniumtriflat,
Diphenyliodoniumbisulfat,
4,4'-Dichlorodiphenyliodoniumbisulfat,
4,4'-Dibromodiphenyliodoniumbisulfat,
3,3'-Dinitrodiphenyliodoniumbisulfat,
4,4'-Dimethyldiphenyliodoniumbisulfat,
4,4'-Bis-succinimidodiphenyliodoniumbisulfat,
3-Nitrodiphenyliodoniumbisulfat,
4,4'-Dimethoxydiphenyliodoniumbisulfat,
Bis-(dodecylphenyl)-iodoniumtetrakis-(pentafluorophenyl)-borat,
(4-Octyloxyphenyl)-phenyliodoniumtetrakis-(3,5-bis-trifluoromethylphenyl)-borat und
(Tolylcumyl)-iodoniumtetrakis-(pentafluorophenyl)-borat,
   und
Ferrocenium-Salze (siehe zum Beispiel EP 542 716 B1) wie η⁵-(2,4-cyclopentadien-1-yl)-[(1,2,3,4,5,6,9)-(1-methylethyl)-benzol]-eisen.

Beispiele für kommerzialisierte Photoinitiatoren sind Cyracure UVI-6990, Cyracure UVI-6992, Cyracure UVI-6974 und Cyracure UVI-6976 der Firma Union Carbide, Optomer SP-55, Optomer SP-150, Optomer SP-151, Optomer SP-170 und Optomer SP-172 der Firma Adeka, San-Aid SI-45L, San-Aid SI-60L, San-Aid SI-80L, San-Aid SI-100L, San-Aid SI-110L, San-Aid SI-150L und San-Aid SI-180L der Firma Sanshin Chemical, SarCat CD-1010, SarCat CD-1011 und SarCat CD-1012 der Firma Sartomer, Degacure K185 der Firma Degussa, Rhodorsil Photoinitiator 2074 der Firma Rhodia, CI-2481, CI-2624, CI-2639, CI-2064, CI-2734, CI-2855, CI-2823 und CI-2758 der Firma Nippon Soda, Omnicat 320, Omnicat 430, Omnicat 432, Omnicat 440, Omnicat 445, Omnicat 550, Omnicat 550 BL und Omnicat 650 der Firma IGM Resins, Daicat II der Firma Daicel, UVAC 1591 der Firma Daicel-Cytec, FFC 509 der Firma 3M, BBI-102, BBI-103, BBI-105, BBI-106, BBI-109, BBI-110, BBI-201, BBI-301, BI-105, DPI-105, DPI-106, DPI-109, DPI-201, DTS-102, DTS-103, DTS-105, NDS-103, NDS-105, NDS-155, NDS-159, NDS-165, TPS-102, TPS-103, TPS-105, TPS-106, TPS-109, TPS-1000, MDS-103, MDS-105, MDS-109, MDS-205, MPI-103,, MPI-105, MPI-106, MPI-109, DS-100, DS-101, MBZ-101, MBZ-201, MBZ-301, NAI-100, NAI-101, NAI-105, NAI-106, NAI-109, NAI-1002, NAI-1003, NAI-1004, NB-101, NB-201, NDI-101, NDI-105, NDI-106, NDI-109, PAI-01, PAI-101, PAI-106, PAI-1001, PI-105, PI-106, PI-109, PYR-100, SI-101, SI-105, SI-106 und SI-109 der Firma Midori Kagaku, Kayacure PCI-204, Kayacure PCI-205, Kayacure PCI-615, Kayacure PCI-625, Kayarad 220 und Kayarad 620, PCI-061T, PCI-062T, PCI-020T, PCI-022T der Firma Nippon Kayaku, TS-01 und TS-91 der Firma Sanwa Chemical, Deuteron UV 1240 der Firma Deuteron, Tego Photocompound 1465N der Firma Evonik, UV 9380 C-D1 der Firma GE Bayer Silicones, FX 512 der Firma Cytec, Silicolease UV Cata 211 der Firma Bluestar Silicones und Irgacure 250, Irgacure 261, Irgacure 270, Irgacure PAG 103, Irgacure PAG 121, Irgacure PAG 203, Irgacure PAG 290, Irgacure CGI 725, Irgacure CGI 1380, Irgacure CGI 1907 und Irgacure GSID 26-1 der Firma BASF.

Dem Fachmann sind weitere Systeme bekannt, die ebenfalls erfindungsgemäß einsetzbar sind. Photoinitiatoren werden unkombiniert oder als Kombination von zwei oder mehreren Photoinitiatoren eingesetzt.

Vorteilhaft sind Photoinitiatoren, die Absorption bei kleiner 350 nm und vorteilhaft bei größer 250 nm aufweisen. Initiatoren, die oberhalb 350 nm absorbieren, beispielsweise im Bereich violetten Lichts, sind ebenfalls einsetzbar. Sulfonium-basierende Photoinitiatoren werden besonders bevorzugt eingesetzt, da sie eine vorteilhafte UV-Absorptionscharakteristik aufweisen.

Des Weiteren können Photosensitizer eingesetzt werden, die in einem Redox-Prozess den Photoinitiator reduzieren. In diesem Prozess wird der eigentliche Photoinitiator zersetzt, wobei reaktive Kationen gebildet werden, die eine kationische Polymerisation starten können. Diese Art der Reaktionsführung erlaubt die Initiation der kationischen Polymerisation bei höheren Wellenlängen. Beispiele für solche Photosensitizer sind Diphenolmethanon und Derivate, Acetophenonderivate wie beispielsweise Irgacure 651, Anthracenderivate wie 2-Ethyl-9,10-Dimethoxy-Anthracen und 9-Hydroxymethyl-Anthracen, Phenylke-tonderivate wie 1-Hydroxycyclohexyl-phenylketon, 2-Hydroxy-2-methyl-1-phenyl-propan-1-one und 4-(2-Hydroxyethoxy)-phenyl-(2-hydroxy-2-methylpropyl)keton (Irgacure 184, Darocur 1173, Irgacure 2959) sowie Thioxanthenon-derivate wie 4-Isopropyl-9-thioxanthenon oder 1-chloro-4-propoxy-thioxanthenon.

Besonders bevorzugte Kombinationen aus Photoinitiator und Sensitizer berücksichtigen die unterschiedlichen Redox-potentiale und Retardierungspotentiale von Zwischenprodukten wie es für Kombinationen aus Diaryliodonium basierten Photoinitiatoren mit Acetophenonsensitizern der Fall ist und in Bulut U., Crivello J. V., J. Polym. Sci. 2005, 43, Seiten 3205 bis 3220, beschrieben ist.

Das Klebeband umfasst ein **Matrixpolymer,** in dem die härtbare Zusammensetzung, die zumindest ein Epoxidharz sowie zumindest ein Härtungsreagenz für das Epoxidharz umfasst, enthalten ist (siehe zum Beispiel US 2002/182955 A1 oder WO 2017/174303 A1). Derartige Klebebänder umfassen somit einen Klebefilm, der grundsätzlich ausgebildet ist aus einem Matrixpolymer mit der darin eingebetteten härtbaren Zusammensetzung, die insbesondere als Reaktivklebstoff dient. Das Matrixpolymer bildet dabei einen selbsttragenden dreidimensionalen Film aus (wobei die räumliche Ausdehnung in Dickenrichtung des Films in der Regel sehr viel kleiner ist als die räumlichen Ausdehnungen in Längs- und Querrichtung, also als in den zwei Raumrichtungen der Flächenausdehnung des Films; zur Bedeutung des Begriffs "Film" siehe hierzu auch weiter unten). In diesem Matrixpolymer ist die härtbare Zusammensetzung, insbesondere der Reaktivklebstoff, bevorzugt im Wesentlichen räumlich gleichverteilt (homogen), insbesondere so dass der Reaktivklebstoff - der ohne die Matrix gegebenenfalls nicht selbsttragend wäre - im erfindungsgemäßen Klebefilm im wesentlichen die gleiche (makroskopische) Raumverteilung einnimmt wie das Matrixpolymer.

Aufgabe des Matrixpolymers ist es, ein inertes Grundgerüst für die reaktiven Monomere und/oder Reaktivharze zu bilden, so dass diese in einem Film oder einer Folie eingelagert sind. Somit können auch ansonsten flüssige Systeme in Filmform angeboten werden. Auf diese Art und Weise wird eine einfachere Handhabung gewährleistet. Die der Matrix zugrunde liegenden Polymere sind dabei durch hinreichende Wechselwirkungen der Makromoleküle untereinander in der Lage, einen selbsttragenden Film ausbilden zu können, beispielweise - ohne sich hierdurch im Erfindungsgedanken unnötig beschränken zu wollen - durch Ausbildung eines Netzwerks aufgrund physikalischer und/oder chemischer Vernetzung.

Inert bedeutet in diesem Zusammenhang, dass die reaktiven Monomere und/oder Reaktivharze unter geeignet gewählten Bedingungen (z. B. bei ausreichend geringen Temperaturen) im Wesentlichen nicht mit der polymeren Filmbildner-Matrix reagieren.

Als geeignete Filmbildner-Matrices zur Verwendung in der vorliegenden Erfindung werden vorzugsweise ein thermoplastisches Homopolymer oder ein thermoplastisches Copolymer eingesetzt, oder ein Blend aus thermoplastischen Homopolymeren oder aus thermoplastischen Copolymeren oder aus einem oder mehreren thermoplastischen Homopolymeren mit einem oder mehreren thermoplastischen Copolymeren. In einer bevorzugten Vorgehensweise werden ganz oder teilweise semikristalline thermoplastische Polymere eingesetzt.

Als thermoplastische Polymere können grundsätzlich beispielsweise Polyester, Copolyester, Polyamide, Poly(ethylen-co-vinylacetat), Copolyamide, Polyacrylsäureester, Acrylsäureester-Copolymere, Polymethacrylsäureester, Methacrylsäureester-Copolymere, thermoplastische Polyurethane sowie chemisch oder physikalisch vernetzte Stoffe der zuvor genannten Verbindungen gewählt werden. Die genannten Polymere können jeweils als einzig eingesetztes Polymer oder als Komponente eines Blends verwendet werden.

Gemäß einer bevorzugten Ausführungsform umfassen die Polymere Copolymer-Einheiten. Besonders bevorzugt unter den Styrolcopolymeren sind Styrol-Kautschuk-Blockcopolymere wie Styrol-Butadien-Styrol-Blockcopolymere, Styrol-Isopren-Styrol-Blockcopolymere sowie Styrol-Ethylen/Butylen-Styrol-Blockcopolymere (SEBS) und Styrol-Ethylen/Propylen-Styrol-Blockcopolymere (SEPS). Besonders bevorzugt unter den Acrylaten und Methacrylaten sind Acrylat- und/oder Methacrylat-Copolymere beispielsweise Glycidylacrylat enthaltende Acrylat- und/oder Methacrylat-Copolymere. Bevorzugte Ethylen-Vinylacetat-Copolymere besitzen einen Vinylacetat-Anteil zwischen 40% und 90%, wie 50% bis 70%. Bevorzugt weisen geeignete Ethylen-Vinylacetat-Copolymere eine Mooney-Viskosität (ML (1+4)/100°C) zwischen 15 und 45, bevorzugt zwischen 20 und 30 auf. Diese sind beispielsweise unter dem Handelsnamen Levapren^{®} von der Firma Lanxess erhältlich. Besonders bevorzugt wird Levapren^{®} verwendet, das einen Vinylacetat-Anteil von etwa 60% und eine Mooney-Viskosität (ML (1+4)/100°C) von 27±4 aufweist. Bevorzugte Styrolcopolymere weisen einen Styrolgehalt zwischen 15% und 50%, bevorzugt 25% bis 40% auf. Bevorzugt weisen geeignete Styrolcopolymeren eine Brookfield-Viskosität (10% w) von 250 bis 2500 auf. Unter den Styrolcopolymeren sind SEBS-Blockcopolymere besonders bevorzugt. Ein solches ist beispielsweise unter dem Handelsnamen Kraton^{®} G1651, mit einem Styrolgehalt von etwa 30% und einer Brookfield-Viskosität (10% w) von 1800 erhältlich. Die genannten Polymere können jeweils als einzig eingesetztes Polymer oder als Komponente eines Blends verwendet werden.

Als **Träger** können alle bekannten Folien und textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind. Besonders vorteilhaft ist ein Klebeband, bei dem als Träger ein Gewebe, ein Vlies oder ein Gewirke eingesetzt wird. Derartige Träger sind beispielsweise in der WO 2015/004190 A1 beschrieben, auf die hier vollständig Bezug genommen wird.

Des Weiteren können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faseroder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden.

Als Vliesstoffe kommen besonders verfestigte Stapelfaservliese, jedoch auch Filament-, Meltblown sowie Spinnvliese in Frage, die meist zusätzlich zu verfestigen sind. Als mögliche Verfestigungsmethoden sind für Vliese die mechanische, die thermische sowie die chemische Verfestigung bekannt. Besonders vorteilhaft haben sich Vliese erwiesen, die insbesondere durch ein Übernähen mit separaten Fäden oder durch Vermaschen verfestigt sind. Derartige verfestigte Vliese werden beispielsweise auf Nähwirkmaschinen des Typs "Malimo" der Firma Karl Mayer, ehemals Malimo, hergestellt und sind unter anderem bei der Firma Hoftex Group AG beziehbar.

Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt.

Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehenden Fasern miteinander verbunden. Die zusätzliche Einbringbarkeit weiterer durchstechbarer Flächengebilde und/oder streufähiger Medien ist gegeben.

Schließlich sind auch Nähvliese als Vorprodukt geeignet, einen erfindungsgemäßen Träger und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer bekannt.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses. Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft und/oder Wasserstrahlbearbeitung vorverfestigt wird. In einem zweiten Schritt erfolgt die Thermofixierung, wobei die Festigkeit des Vlieses durch das Auf- oder Anschmelzen der Schmelzfasern nochmals erhöht wird.

Vorteilhaft und zumindest bereichsweise weist der Träger eine ein- oder beidseitig glattgeschliffene Oberfläche auf, vorzugsweise jeweils eine vollflächig glattgeschliffene Oberfläche. Die glattgeschliffene Oberfläche mag gechintzt sein, wie es beispielsweise in der EP 1 448 744 A1 erläutert wird. Auf diese Weise wird die Abweisbarkeit von Schmutz verbessert.

Als Ausgangsmaterialien für den Träger sind insbesondere (Chemie-)Fasern (Stapelfaser oder Endlosfilament) aus synthetischen Polymeren, auch synthetische Fasern genannt, aus Polyester wie Polyethylenterephthalat, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Des Weiteren sind Garne, gefertigt aus den angegebenen Rohstoffen, ebenfalls geeignet. Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.

Bevorzugt wird als Material für den Träger Polyester verwendet, aufgrund der hervorragenden Alterungsbeständigkeit und der hervorragenden Medienbeständigkeit gegenüber Chemikalien und Betriebsmitteln wie Öl, Benzin, Frostschutzmittel u.ä. Darüber hinaus hat Polyester den Vorteil, dass sie zu einem sehr abriebfesten und temperaturbeständigen Träger führen, was für den speziellen Einsatzzweck zur Bündelung von Kabeln in Automobilen und beispielsweise im Motorraum von besonderer Wichtigkeit ist.

Besonders vorteilhaft ist das Trägermaterial UV-transparent.

Vorteilhaft liegt das Flächengewicht des textilen Trägers zwischen 30 g/m² und 300 g/m² weiter vorteilhaft zwischen 50 g/m² und 200 g/m², besonders vorteilhaft zwischen 50 g/m² und 150 g/m², ganz besonders vorteilhaft zwischen 70 g/m² und 130 g/m².

Gemäß einer besonders vorteilhaften Ausführungsform der Erfindung werden als Träger ein Gewebe oder ein Vlies aus Polyester eingesetzt, die ein Flächengewicht zwischen 50 g/m² und 150 g/m² aufweisen.

Gemäß einer weiteren Ausführungsform der Erfindung wird als Träger PET-Folien verwendet. Die Dicke der PET-Folien beträgt vorzugsweise von 10 µm bis 50 µm, z.B. etwa 12 µm, etwa 23 µm oder etwa 50 µm.

Vorteilhaft liegt der Masseauftrag der auf dem Träger aufgebrachten und/oder in den Träger eingebrachten UV-härtbaren Zusammensetzung zwischen 50 g/m² und 500 g/m², weiter vorteilhaft zwischen 100 g/m² und 250 g/m², besonders vorteilhaft zwischen 100 g/m² und 200 g/m². Gemäß einer bevorzugten Ausführungsform der Erfindung ist die Klebemasse nach dem Aufbringen auf und/oder Einbringen in den Träger, insbesondere auf einem Vliesträger, zu mehr als 10%, vorzugsweise zu mehr als 25%, weiter vorzugsweise zu mehr als 50% in den Träger eingesunken. Ein Zahlenwert von beispielsweise 25% bedeutet dabei, dass die Klebemasse über eine Schichtdicke von 25% der Dicke des textilen Trägers eingedrungen ist, also bei einem Träger mit einer Dicke von 100 um über eine Schichtdicke von 25 um innerhalb des Trägers, und zwar beginnend von der Fläche des Trägers, auf der die Klebemasse beschichtet ist, und in senkrechter Richtung zu der von der Längs-beziehungsweise Quererrichtung aufgespannten Ebene.

Das Einbringen in den Träger, insbesondere in einen Vlies- oder Gewebeträger kann beispielsweise durch Tränken des Trägers mit der UV-härtbaren Zusammensetzung erfolgen.

Gemäß einer Ausführungsform umfasst das Band mit der UV-härtbaren Zusammensetzung zusätzlich noch ein Haftklebstoff, so dass das Band nach dem Umwickeln und vor dem Aushärten auf dem langgestreckten Gut fixiert ist.

Der **Haftklebstoff** ist eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Bevorzugt sind Haftklebstoffe, wie sie in den veröffentlichten europäischen Patentanmeldungen EP 2 520 627 A1, EP 2 522 705 A1, EP 2 520 628 A1, EP 2 695 926 A1, EP 2 520 629 A1 und EP 3 433 330 A1 beschrieben werden, auf die hier diesbezüglich Bezug genommen wird.

Gemäß einer ersten Ausführungsform liegt die Haftklebemasse in Form einer getrockneten Polymerdispersion vor, wobei das Polymer aufgebaut ist aus: 5 bis 25 Gew.-%, vorzugsweise 10 bis 22 Gew.-% Ethylen, 30 bis 69 Gew.-%, vorzugsweise 40 bis 60 Gew.-% Alkylacrylatester mit C₄- bis C₁₂-Alkylresten, 20 bis 55 Gew.-%, vorzugsweise 28 bis 38 Gew.-% Vinylacetat, 0 bis 10 Gew.-% andere ethylenisch ungesättigte Verbindungen und die Haftklebemasse zwischen 15 und 100 Gewichtsteile eines Klebrigmachers (bezogen auf die Masse der getrockneten Polymerdispersion) enthält, wie in EP 2 520 627 A1 beschrieben. Bevorzugt handelt es sich bei dem Alkylacrylatester um n-Butylacrylat und/oder 2-Ethylhexylacrylat. Andere ethylenisch ungesättigte Verbindungen umfassen Alkyl(meth)acrylate, bevorzugt C₁- bis C₂₀-Alkyl(meth)acrylate mit Ausnahme der die Alkylacrylester mit C₄- bis C₁₂-Alkylresten bildenden Monomere, aromatische Vinylmonomere wie Styrol, α-Methylstyrol und Vinyltoluol, C₁- bis C₁₀-Hydroxyalkyl(meth)acrylate wie insbesondere Hydroxyethyl- oder Hydroxypropyl(meth)acrylat, Vinylester aus bis zu 20 Kohlenstoffatomen enthaltenden Carbonsäuren wie Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Säureamide wie Acrylamid oder Methacrylamid und ungesättigte Kohlenwasserstoffe mit 3 bis 8 Kohlenstoffatomen wie Propen, Butadien, Isopren, 1-Hexen oder 1-Octen oder deren Mischungen. Darüber hinaus können dem Polymer als Monomer weiterhin vorteilhafterweise ein di- oder mehrfunktionelles Monomer zugesetzt sein, und zwar vorzugsweise zu 0 bis 2 Gew.-% und besonders vorzugsweise zu 0 bis 1 Gew.-%. Beispiele für mehrfunktionale ethylenisch ungesättigte Monomere (e) sind Divinylbenzol, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantri-acrylat und Tetraacrylate wie Pentaerythritoltetraacrylat. Die Polymerdispersion wird hergestellt durch das Verfahren der Emulsionspolymerisation der genannten Komponenten. Besonders bevorzugte Ausführungsformen und ausführliche Beschreibungen der Einsatzstoffe sowie der Herstellungsverfahren findet man in EP 0 017 986 B1 sowie EP 0 185 356 B1.

Gemäß einer weiteren Ausführungsform liegt die Haftklebemasse in Form einer getrockneten Polymerdispersion vor, wobei das Polymer aufgebaut ist aus: (a) 90 bis 99 Gew.-% n-Butylacrylat und/oder 2-Ethylhexylacrylat, bevorzugt 2-Ethylhexylacrylat, (b) 0 bis 10 Gew.-% eines ethylenisch ungesättigten Monomers mit einer Säure- oder Säureanhydridfunktion, (c) 10 bis 1 Gew.-% eines oder mehreren von (a) und (b) verschiedenen ethylenisch ungesättigten monofunktionellen Monomeren, wie Acrylnitril und/oder Methacrylnitril, (d) 0 bis 1 Gew.-% eines di- oder mehrfunktionellen Monomers und die Haftklebemasse zwischen 15 und 100 Gewichtsteile eines Klebrigmachers (bezogen auf die Masse der getrockneten Polymerdispersion) enthält, wie in EP 2 522 705 A1 beschrieben. Eine besonders bevorzugte Ausführungsform der Erfindung umfasst also eine Mischung aus 2-Ethylhexylacrylat als Monomer (a) und Acrylnitril als Monomer (c). Als Monomer (b) kommen vorteilhaft in Betracht zum Beispiel Acrylsäure, Methacrylsäure, Itaconsäure, Maleinsäure, Fumarsäure und/oder Maleinsäureanhydrid. Bevorzugt sind Acrylsäure oder Methacrylsäure, gegebenenfalls die Mischung aus beiden. Beispiele für mehrfunktionale ethylenisch ungesättigte Monomere (d) sind Divinylbenzol, Alkyldiacrylate wie 1,2-Ethylenglykoldiacrylat, 1,4-Butandioldiacrylat, 1,6-Hexandiol-diacrylat, 1,8-Octandioldiacrylat oder 1,12-Dodecandiol-diacrylat, Triacrylate wie Trimethylolpropantriacrylat und Tetraacrylate wie Pentaerythritoltetraacrylat. Die Polymerdispersion wird hergestellt durch das Verfahren der Emulsionspolymerisation der genannten Komponenten. Beschreibungen dieses Verfahrens werden zum Beispiel gegeben in der EP 1 378 527 B1 beschrieben.

Gemäß einer weiteren Ausführungsform liegt die Haftklebemasse in Form einer getrockneten Polymerdispersion vor, wobei das Polymer aufgebaut ist aus: (a) 40 bis 90 Gew.-% n-Butylacrylat und/oder 2-Ethylhexylacrylat, bevorzugt (b) 2-Ethylhexylacrylat, 0 bis 10 Gew.-% eines ethylenisch ungesättigten Monomers mit einer Säure- oder Säureanhydridfunktion, (c) 60 bis 10 Gew.-% eines oder mehreren von (a) und (b) verschiedenen ethylenisch ungesättigten monofunktionellen Monomeren, (d) 0 bis 1 Gew.-% eines di- oder mehrfunktionellen Monomers und die Haftklebemasse zwischen 15 und 100 Gewichtsteile eines Klebrigmachers (bezogen auf die Masse der getrockneten Polymerdispersion) enthält, wie in EP 2 520 628 A1 beschrieben. Als Monomer (b) kommen vorteilhaft in Betracht zum Beispiel Acrylsäure, Methacrylsäure, Itaconsäure, Maleinsäure, Fumarsäure und/oder Maleinsäureanhydrid. Bevorzugt sind Acrylsäure oder Methacrylsäure, gegebenenfalls die Mischung aus beiden. Unter Monomere (c) fallen Alkyl(meth)acrylate, bevorzugt C₁- bis C₂₀-Alkyl(meth)acrylate mit Ausnahme der (a) bildenden Monomere, aromatische Vinylmonomere wie Styrol, α-Methylstyrol und Vinyltoluol, C₁- bis C₁₀-Hydroxyalkyl-(meth)acrylate wie insbesondere Hydroxyethyl- oder Hydroxy-propyl(meth)acrylat, Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Säureamide wie Acrylamid oder Methacrylamid und ungesättigte Kohlenwasserstoffe mit 2 bis 8 Kohlenstoffatomen wie Ethylen, Propen, Butadien, Isopren, 1-Hexen oder 1-Octen. Erfindungsgemäß besonders bevorzugt ist Ethylacrylat. Beispiele für mehrfunktionale ethylenisch ungesättigte Monomere (d) sind Divinylbenzol, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat. Die Polymerdispersion wird hergestellt durch das Verfahren der Emulsionspolymerisation der genannten Komponenten. Beschreibungen dieses Verfahrens werden zum Beispiel gegeben in der EP 1 378 527 B1 beschrieben.

Gemäß einer weiteren Ausführungsform liegt die Haftklebemasse in Form einer getrockneten und Elektronenstrahl (ESH) vernetzten polymeren Acrylatdispersion, insbesondere einer wässrigen Acrylatdisperion, bevorzugt mit einem Gelwert von größer gleich 40 %, bestimmt mittels Soxhlet-Extraktion, wobei die polymere Acrylatdispersion Polymere umfasst, die aufgebaut sind aus (a) monomeren Acrylaten und optional (b) ethylenisch ungesättigten Comonomeren, die keine Acrylate sind, wobei die Haftklebemasse zwischen 15 und 100 Gewichtsteile eines Klebrigmachers (bezogen auf die Masse der getrockneten polymeren Dispersion) enthält, wie in EP 2 695 926 A1 beschrieben.

Gemäß einer weiteren Ausführungsform weist die Haftklebemasse eine Scherviskosität ei einer Temperatur von 25°C während der Beschichtung aus Dispersion 200 bis 100.000 Pa·s bei einer Schergeschwindigkeit von 10⁻² s⁻¹ und 0,1 bis 10 Pa·s bei einer Schergeschwindigkeit von 100 s⁻¹ auf. Die Haftklebemasse besteht vorzugsweise aus einer wässrigen Acrylatdispersion, also einem in Wasser fein dispergierten Polyacrylsäureester mit Haftklebeeigenschaften, wie sie zum Beispiel im Handbook of Pressure Sensitive Technology von D. Satas beschrieben sind. Acrylathaftklebemassen sind typischerweise radikalisch polymerisierte Copolymere aus Acrylsäurealkylestern oder Methacrylsäurealkylestern von C₁- bis C₂₀-Alkoholen wie zum Beispiel Methylacrylat, Ethyl(meth)acrylat, n-Butyl(meth)acrylat, t-Butyl(meth)acrylat, Cyclohexyl(meth)acrylat, 2-Ethylhexyl(meth)acrylat, n-Octyl(meth)acrylat, iso-Octyl(meth)-acrylat, n-Decyl(meth)acrylat, n-Dodecyl(meth)acrylat, Tetradecyl-(meth)acrylat, Lauryl(meth)acrylat, Oleyl(meth)acrylat, Palmityl-(meth)acrylat und Stearyl(meth)acrylat neben weiteren (Meth)acrylsäureestern wie Isobornyl(meth)acrylat, Benzyl(meth)-acrylat, Phenyl(meth)acrylat und 2-Bromoethyl(meth)acrylat, Alkoxy-alkyl(meth)acrylate wie Ethoxyethyl(meth)acrylat. Weiterhin fallen darunter Ester von ethylenisch ungesättigten Di- und Tricarbonsäuren und Anhydriden wie Ethylmaleat, Dimethylfumarat und Ethyl-methylitaconat. Ebenfalls fallen vinylaromatische Monomere wie zum Beispiel Styrol, Vinyltoluol, Methylstyrol, n-Butylstyrol, Decylstyrol darunter, wie in der EP 2 520 629 A1 beschrieben.

Gemäß einer weiteren Ausführungsform liegt die Haftklebemasse in Form einer getrockneten Polymerdispersion vor, wobei das Polymer aufgebaut ist aus: (a) 95,0 bis 100,0 Gew.-% n-Butylacrylat und/oder 2-Ethylhexylacrylat und (b) 0,0 bis 5,0 Gew.-% eines ethylenisch ungesättigten Monomers mit einer Säure- oder Säureanhydridfunktion, wie in der EP 2 433 330 A1 beschrieben. Vorzugsweise besteht das Polymer aus 95,0 bis 99,5 Gew.-% n-Butylacrylat und/oder 2-Ethylhexylacrylat und 0,5 bis 5 Gew.-% eines ethylenisch ungesättigten Monomers mit einer Säure- oder Säureanhydridfunktion, weiter vorzugsweise aus 98,0 bis 99,0 Gew.-% n-Butylacrylat und/oder 2-Ethylhexylacrylat und 1,0 bis 2,0 Gew.-% eines ethylenisch ungesättigten Monomers mit einer Säure- oder Säureanhydrid-funktion. Neben den aufgeführten Acrylatpolymeren können der Haftklebemasse neben gegebenenfalls vorhandenen Restmonomeren zusätzlich die weiter unten erwähnten Klebrigmacher und/oder Zuschlagstoffe wie Lichtschutz- oder Alterungsschutzmitteln in den ebenfalls unten genannten Mengen zugesetzt werden. Insbesondere sind keine weiteren Polymere wie Elastomere in der Haftklebemasse enthalten, das heißt, das die Polymere der Haftklebemasse bestehen nur aus den Monomeren (a) und (b) in den angegebenen Mengenverhältnissen.

Gemäß einer weiteren Ausführungsform liegt die Haftklebemasse in Form einer getrockneten und Polymerdispersion vor, wobei das Polymer aufgebaut ist aus: (a) 97,0 bis 98,0 Gew.-% n-Butylacrylat und/oder 2-Ethylhexylacrylat, (b) 2,0 bis 3,0 Gew.-% eines ethylenisch ungesättigten Monomers mit einer Säure- oder Säureanhydridfunktion. Vorzugsweise besteht das Polymer aus 97,2 bis 97,7 Gew.-% n-Butylacrylat und/oder 2-Ethylhexylacrylat, bevorzugt n-Butylacrylat, und 2,3 bis 2,8 Gew.-% eines ethylenisch ungesättigten Monomers mit einer Säure- oder Säureanhydridfunktion. Als Monomer (b) kommen vorteilhaft in Betracht zum Beispiel Acrylsäure, Methacrylsäure, Itaconsäure, Maleinsäure, Fumarsäure und/oder Maleinsäure-anhydrid.

Gemäß einer weiteren Ausführungsform sind die Haftklebemassen verntzerfrei. "Vernetzerfrei" im Sinne dieser Erfindung bedeutet, dass der Haftklebemasse keine zur Vernetzung befähigten Verbindungen zugesetzt werden. Wie hier verwendet, steht der Begriff Vernetzer für chemische Verbindungen, die imstande sind, Molekülketten miteinander zu verbinden, damit sich aus den zweidimensionalen Strukturen über Ausbildung intermolekularer Brücken dreidimensional-vernetzte Strukturen bilden können. Vernetzer sind solche - insbesondere bi- oder polyfunktionelle, meist niedermolekulare - Verbindungen, die unter den gewählten Vernetzungsbedingungen mit geeigneten - insbesondere funktionellen - Gruppen der zu vernetzenden Polymere reagieren können, somit zwei oder mehrere Polymere oder Polymerstellen miteinander verknüpfen ("Brücken" bilden) und somit ein Netzwerk aus dem zu vernetzenden Polymer beziehungsweise den zu vernetzenden Polymeren schaffen. Hierdurch kommt es in der Regel zur Kohäsionserhöhung. Typische Beispiele für Vernetzer sind chemische Verbindungen, die innerhalb des Moleküls oder an den beiden Molekülenden zwei oder mehr gleiche oder unterschiedliche funktionelle Gruppen aufweisen und folglich Moleküle gleicher oder auch unterschiedlicher Strukturen miteinander vernetzen können. Außerdem kann ein Vernetzer mit dem reaktiven Monomer oder Reaktivharz, wie oben definiert, reagieren, ohne dass es dabei zu einer Polymerisation im eigentlichen Sinne kommt. Denn im Gegensatz zum Aktivator, wie oben beschrieben, kann ein Vernetzer in das Polymer-Netzwerk eingebaut werden.

Vorteilhaft liegt der Masseauftrag der auf dem Träger aufgebrachten und/oder in den Träger eingebrachten Klebemasse zwischen 50 g/m² und 500 g/m², weiter vorteilhaft zwischen 100 g/m² und 250 g/m², besonders vorteilhaft zwischen 30 g/m² und 130 g/m².

Das fertig beschichtete Material wird vorzugsweise in eine Breite von 20±2 mm (jede andere Breite ist ebenfalls denkbar) geschnitten und bei Anwendung zur Umwicklung von langgestrecktem Gut spiralförmig mit einer Überlappung von 50% um das langgestreckte Gut - wie ein Kabelbündel - gewickelt.

Das fertig beschichtete Material wird vorzugsweise mit einer Schutzfolie versehen.

Gegenstand der vorliegenden Erfindung ist ein Verfahren zum Ummanteln von langgestrecktem Gut wie insbesondere Leitungen oder Kabelsätzen, wobei ein Klebeband in einer Schraubenlinie um das langgestreckte Gut geführt wird oder das langgestreckte Gut in axialer Richtung von dem Klebeband umhüllt wird, das langgestreckte Gut mitsamt dem umhüllenden Klebeband in die gewünschte Anordnung, insbesondere in den Kabelsatzplan gebracht wird, das langgestreckte Gut in dieser Anordnung gehalten wird, die aushärtbare Klebemasse durch die Zufuhr von UV-Strahlungsenergie zum Aushärten gebracht wird. Vorzugsweise wird die UV-Strahlungsenergie über einen Zeitraum von 0,5 Sek. bis 6 Min. zugeführt, der mit den Taktzeiten des Fertigungsprozesses kompatibel ist, so dass das langgestreckte Gut vollständig ausgehärtet ist, sobald es im Zielobjekt wie Automobilen, Wasserfahrzeugen oder Flugzeugen verbaut wird.

Das Band wird vorzugsweise spiralförmig mit einer Überlappung von 30% bis 70%, bevorzugter 40 bis 50%, insbesondere etwa 50% um das langgestreckte Gut umwickelt.

### Beispiele:

### Beispiel 1 - Herstellung eines Polyacrylats

Ein für radikalische Polymerisationen konventioneller 2 L Glasreaktor wurde mit 40 g Glycidylacrylat, 240 g 2 Ethylhexylacrylat, 120 g C₁₇-Acrylat (dreifach verzweigte Seiten mit C₃-, C₄-Kettensegmenten, BASF SE), 133 g Siedegrenzbenzin 69/95 und 133 g Aceton befüllt. Nachdem 45 Minuten Stickstoffgas unter Rühren durch die Reaktionslösung geleitet worden war, wurde der Reaktor auf 58°C geheizt und 0,2 g Vazo 67 (Firma DuPont) hinzugegeben. Anschließend wurde das äußere Heizbad auf 75°C erwärmt und die Reaktion konstant bei dieser Außentemperatur durchgeführt. Nach 1 h Reaktionszeit wurden 50 g Toluol hinzugegeben. Nach 2,5 h wurde mit 100 g Aceton verdünnt. Nach 4 h Reaktionszeit wurden nochmals 0,2 g Vazo 67 hinzugegeben. Nach 7 h Polymerisationszeit wurde mit 100 g Siedegrenzbenzin 60/95, nach 22 h mit 100 g Aceton verdünnt. Nach 24 h Reaktionszeit wurde die Polymerisation abgebrochen und das Reaktionsgefäß auf Raumtemperatur abgekühlt. Das Molekulargewicht Mₙ des Produkts betrug 624000 g/mol.

### Beispiel 2 - Herstellung von Klebemassen

Es wurden Klebemassen mit den folgenden Rezepturen hergestellt
**K1**
   30 Gewichtsanteile Levapren^{®} 600
   70 Gewichtsanteile Epikote^{®} 828
   1 Gewichtsanteil Triarylsulfoniumhexafluoroantimonat
**K2**
   30 Gewichtsanteile Acrylat gemäß Beispiel 1
   35 Gewichtsanteile Epikote^{®} 828
   35 Gewichtsanteile Araldite^{®} ECN1273
   1 Gewichtsanteil Triarylsulfoniumhexafluoroantimonat
**K3**
   37,5 Gewichtsanteile Kraton^{®} G1657
   37,5 Gewichtsanteile Regalite^{®} R1100
   25 Gewichtsanteile Uvacure 1500
   1 Gewichtsanteil Triarylsulfoniumhexafluoroantimonat

### Beispiel 3 - Herstellung von Klebebändern

Die gemäß Beispiel 2 hergestellten Klebemassen-Zusammensetzungen werden auf ein 20 mm breites und 100 µm dickes Polyester-Vlies zur Herstellung eines Klebebandes (eines versteifenden Materials) aufgetragen und mit einer Schutzfolie versehen.

### Beispiel 4 - Biegeprüfung zur Ermittlung der Steifigkeit

Ein Prüfmuster, bestehend aus 250 Einzelleitungen mit einem Leitungsquerschnitt von 0,35 mm², wurde mithilfe eines 9 mm breiten Klebebandes (tesa 51618) zu einem Musterleitungssatz gebündelt, so dass der Musterleitungssatz einen Durchmesser von 23±5 mm und eine Länge von 300±50 mm aufwies. Dieser Musterleitungssatz wurde mit dem versteifenden Material spiralförmig umwickelt, wobei ein Überlapp von 50% gewährleistet wurde. Anschließend wurde das versteifende Material mittel UV-Strahlung gehärtet.

Der gehärtete Musterleitungssatz wurde einer Biegeprüfung unterzogen, um den Einfluss des versteifenden Materials auf die Steifigkeit zu bestimmen. Die Biegeprüfung wurde an einer Zugprüfmaschine vorgenommen. Dafür wurde der Musterleitungssatz auf zwei Backen mit einem Abstand von 70 mm gelegt und mittig mit einer Druckfinne um einen Weg von 30 mm eingedrückt und belastet. Die für die Verformung des Messwegs nötige Kraft wurde von einer Zugprüfmaschine in Newton aufgezeichnet. Die Prüfgeschwindigkeit betrug 100 mm/min, sowohl bei der Belastung, als auch bei der Entlastung des Musterleitungssatzes. Die Prüfung wurde an 3 verschiedenen Stellen des Leitungssatzes (Anfang, Mitte und Ende) durchgeführt. Die Biegekraft resultiert aus dem Mittelwert der drei Einzelmessungen und wurde in drei Kategorien wie folgt bewertet:

### Bewertungskategorien 3-Punkt Biegeversuch:

+ gut geeignet für die Anwendung (500-750 N)
O eingeschränkt geeignet für die Anwendung (400-500 N und 700-800 N)
- nicht geeignet für die Anwendung (<400 und >800 N)

Zum Vergleich wurde ein kommerziell erhältliches Klebeband, tesa^{®} 51036, dem gleichen Versuch unterworfen. Die Ergebnisse sind in der nachfolgenden Tabelle 1 aufgeführt.

### Beispiel 5 - C-Form-Prüfung zur Ermittlung der Steifigkeit bei unterschiedlichen Temperaturen

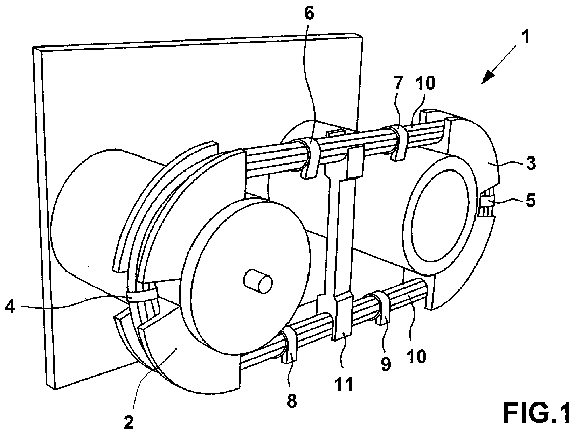

Zur Ermittlung der Steifigkeit eines gebogenen Kabelmusters wurde ein Testverfahren entwickelt (C-Kabelmuster-Biegeprüfung). Zur Herstellung eines C-Kabelmusters (siehe Fig. 1) wird eine Kabelleitung (10) mit einem Leitungsquerschnitt von 0,35 mm² 100 mal um eine Halterung (1) zu einem Musterleitungssatz gewickelt. Die Halterung (1) weist zwei gegenüberliegende, halbkreisförmige Führungen (2, 3) mit einem Durchmesser von 120 mm auf, die mit einem Abstand (A) von etwa 210 mm beabstandet sind. Der gewickelte Kabelsatz ist in **Fig. 1** dargestellt.

Die Zahl der Kabelwicklungen beträgt 100. Es entsteht ein Musterleitungssatz mit einem Durchmesser von 15±5 mm und einem Umfang von 690 mm. An den Apizes der Halbkreissegmente und an jeweils zwei Geradenabschnitten (Schenkeln) wird das Kabelbündel (10) mit Kabelbindern (4, 5, 6, 7, 8, 9) mit einer Zugkraft von 210±10 N zusammengeschnürt und fixiert, so dass das das Kabelbündel (10) nach Herausnahme aus der Halterung eine ausreichende Steifigkeit besitzt, um sich nicht zu verformen. Um sie Steifigkeit des Kabelbündels (10) weiter zu verbessern, wird zwischen den Schenkeln des Kabelbündels eine Stütze (11) positioniert und ebenfalls mit Kabelbindern fixiert.

Das so hergestellte Kabelbündel (10) wird aus der Halterung herausgenommen und mit dem zu prüfenden Klebeband (Breite 19 mm-20 mm) mit einer 50%igen Überlappung umwickelt. Dazu wird mit der Umwicklung an einem Kabelbinder (z.B. 6 oder (7)) des Schenkels in Richtung Kreissegment ((6)->(4) oder (7)->(5)) begonnen. Wenn die Umwicklung den Kabelbinder (4) bzw. (5) am Apex des Halbkreissegments erreicht, wird dieser entfernt und die Wicklung bis zum nächsten Kabelbinder ((4)->(8) bzw. (5)->(9)) des gegenüberliegenden Schenkels fortgeführt. Genauso wird auch an der anderen Seite, am anderen Halbkreissegment verfahren.

Die so präparierten Muster werden der entsprechenden Vernetzungsmethode (UV-Bestrahlung, 365 nm) zugeführt. Mit einem Seitenschneider werden die Muster, benachbart zu den noch vorhandenen Kabelbindern geschnitten, um zwei "C-förmige" Kabelmuster (C-Kabelmuster) zu erhalten, die an beiden Seiten des halbkreisförmigen, umwickelten Abschnitts jeweils auch einen nicht umwickelten Abschnitt aufweisen. Der Schnitt erfolgt im Abstand des Durchmessers (120 mm) vom Apex des Halbkreissegments, projiziert auf die Kreismitte.

Mit je einem Stück Kabel werden Schlaufen an die Schenkelenden der Muster gebunden, damit sie an dem einen Ende aufgehängt und am anderen Ende ein Gewicht angehängt werden kann. Die verbliebenen Kabelbinder werden jetzt entfernt, da sie das Prüfergebnis verfälschen können. Der Abstand zwischen den Schenkeln wird nun bestimmt.

Eines der beiden Muster wird unter Raumtemperatur gelagert und das andere bei 60°C.

An den jeweiligen unteren Schenkel des "C-Prüflings" wird ein 1 kg-Gewicht gehängt. Nach einer Stunde wird die Auslenkung des Kabelbündels notiert (Auslenkverhalten 1 h bei RT bzw. 60°C) und das Gewicht entfernt. Nach einer Minute wird die Auslenkung erneut bestimmt (Rückstellverhalten 1 min bei RT bzw. 60°C). Nach einer Stunde wird die Auslenkung dann wieder bestimmt und notiert (Rückstellverhalten 1 h bei RT bzw. 60°C).

Die ermittelten Werte der C-Form-Verformung wurden in drei Kategorien eingestuft, gut geeignet für die Anwendung, eingeschränkt geeignet für die Anwendung und nicht geeignet für die Anwendung. Die Kategorien wurden wie folgt bewertet:

### Bewertungskategorien C-Form-Biegeversuch (Raumtemperatur):

+ gut geeignet für die Anwendung (< 15% Auslenkung)
O eingeschränkt geeignet für die Anwendung (>15-30%)
- nicht geeignet für die Anwendung (>30%)

### Bewertungskategorien C-Form-Biegeversuch (60°C):

+ gut geeignet für die Anwendung (< 25% Auslenkung)
O eingeschränkt geeignet für die Anwendung (>25-40%)
- nicht geeignet für die Anwendung (>40%)

### Bewertungskategorien C-Form-Biegeversuch (Rückstellverhalten bei RT und 60°C):

+ gut geeignet für die Anwendung (< 10% Auslenkung)
O eingeschränkt geeignet für die Anwendung (10-30%)
- nicht geeignet für die Anwendung (>30%)

Zum Vergleich wurde ein kommerziell erhältliches Klebeband, tesa^{®} 51036, dem gleichen Versuch unterworfen. Die Ergebnisse sind ebenfalls in der nachfolgenden Tabelle 1 aufgeführt.

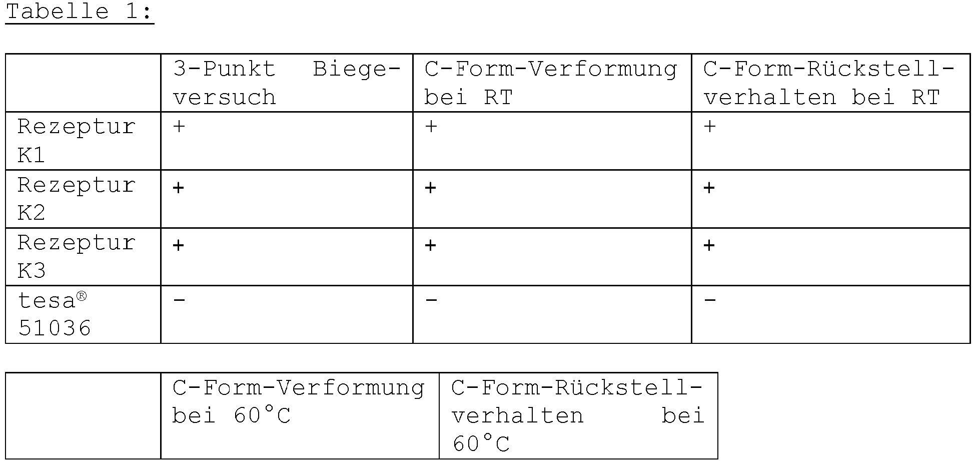

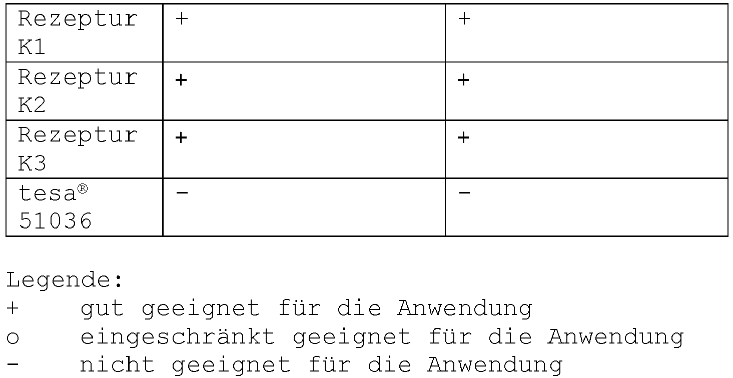

## Patentansprüche

1. Verfahren zum Ummanteln von langgestrecktem Gut wie insbesondere Leitungen
oder Kabelsätzen, wobei ein Klebeband in einer Schraubenlinie um das langgestreckte Gut geführt wird oder das langgestreckte Gut in axialer Richtung von dem Klebeband umhüllt wird, das langgestreckte Gut mitsamt dem umhüllenden Klebeband in die gewünschte Anordnung, insbesondere in den Kabelsatzplan gebracht wird, das langgestreckte Gut in dieser Anordnung gehalten wird, die aushärtbare Klebemasse durch die Zufuhr von UV-Strahlungsenergie zum Aushärten gebracht wird,
**dadurch gekennzeichnet, dass**
das Klebeband einen bandförmigen Träger umfasst, der auf mindestens einer Seite mit einer Klebeschicht versehen ist, die aus einem selbstklebenden Haftklebestoff besteht, wobei der selbstklebende Haftklebestoff eine UV-härtbare Zusammensetzung ist, umfassend bezogen auf das Gesamtgewicht der Zusammensetzung:
15 bis 50 Gewichtsteile Matrixpolymer;
50 bis 85 Gewichtsteile Epoxidharz;
0,1 bis 3 Gewichtsteile Photoinitiator, wobei das Matrixpolymer einen selbsttragenden Film bildet, in dem Epoxidharz und Photoinitiator eingebettet sind.

2. Verfahren nach Anspruch 1, **dadurch gekennzeichnet, dass** die UV-härtbare Zusammensetzung, bezogen auf deren Gesamtgewicht, 20-40 Gewichtsteile Matrixpolymer umfasst.

3. Verfahren nach einem der vorangehenden Ansprüche, **dadurch gekennzeichnet, dass** die UV-härtbare Zusammensetzung, bezogen auf deren Gesamtgewicht, 60 bis 75 Gewichtsteile Epoxidharz umfasst.

4. Verfahren nach einem der vorangehenden Ansprüche, **dadurch gekennzeichnet, dass** das Matrixpolymer ausgewählt ist aus der Gruppe bestehend aus Styrol-Copolymeren, Acrylat-Copolymeren, Methacrylat-Copolymeren, thermoplastischen Polyurethanen, Copolyestern, Copolyamiden und Ethylen-Vinylacetat-Copolymeren und Mischungen derselben.

5. Verfahren nach einem der vorangehenden Ansprüche, **dadurch gekennzeichnet, dass** das Epoxidharz ausgewählt ist aus der Gruppe bestehend aus 3,4-Epoxycyclohexylmethyl-3',4'-epoxycyclohexancarboxylat (EEC) und Derivate, Dicyclopentadiendioxid und Derivate, 3-Ethyl-3-oxetanmethanol und Derivate, Tetrahydrophthal-säurediglycidylester und Derivate, Hexahydrophthalsäurediglycidylester und Derivate, 1,2-Ethandiglycidylether und Derivate, 1,3-Propandiglycidylether und Derivate, 1,4-Butandioldiglycidyl-ether und Derivate, höhere 1,n-Alkandiglycidylether und Derivate, Bis-[(3,4-epoxycyclohexyl)methyl]adipat und Derivate, Vinylcyclohexyldioxid und Derivate, 1,4-Cyclohexandimethanol-bis-(3,4-epoxy-cyclohexancarboxylat) und Derivate, 4,5-Epoxy-tetrahydro-phthalsäurediglycidylester und Derivate, Bis-[1-ethyl(3-oxetanyl)methyl)ether und Derivate, Pentaerythritol-tetraglycidylether und Derivate, Bisphenol-A-Digylcidyl-ether (DGEBA), hydriertes Bisphenol-A-Diglycidylether, Bisphenol-F-Diglycidylether, hydriertes Bisphenol-F-Diglycidylether, Epoxyphenol-Novolaks, hydrierte Epoxy-phenol-Novolak, Epoxycresol-Novolaks, hydrierte Epoxy-cresol-Novolaks, 2-(7-Oxabicyclo[4.1.0]hept-3-yl; Spiro[1,3-dioxane-5,3'-[7]oxabicyclo[4.1.0]-heptane], 1,4-Bis((2,3-epoxypropoxy)-methyl)cyclohexane.

6. Verfahren nach einem der vorangehenden Ansprüche, **dadurch gekennzeichnet, dass** das Trägermaterial UV-transparent ist.

7. Verfahren nach einem der vorangehenden Ansprüche, **dadurch gekennzeichnet, dass** das Trägermaterial ein Polyestervlies umfasst.

8. Verfahren nach Anspruch 1, **dadurch gekennzeichnet, dass** die UV-Strahlungsenergie über einen Zeitraum von 0,5 Sek. bis 6 Min. zugeführt wird.

## Claims

1. Method for jacketing an elongated item such as more particularly leads or cable sets, where an adhesive tape is guided in a helical line around the elongated item or the elongated item is wrapped in an axial direction by the adhesive tape, the elongated item together with the adhesive tape wrapping is brought into the desired disposition, more particularly into the cable set plan, the elongated item is held in this disposition, the curable adhesive is brought to cure by the supply of UV radiation energy, **characterized in that** the adhesive tape comprises a tapelike carrier provided on at least one side with an adhesive layer which consists of a self-adhesive, pressure-sensitive adhesive, the self-adhesive pressure-sensitive adhesive being a UV-curable composition comprising, based on the total weight of the composition:
15 to 50 parts by weight of matrix polymer;
50 to 85 parts by weight of epoxy resin;
0.1 to 3 parts by weight of photoinitiator, with the matrix polymer forming a self-supporting film in which epoxy resin and photoinitiator are embedded.

2. Method according to Claim 1, **characterized in that** the UV-curable composition, based on its total weight, comprises 20-40 parts by weight of matrix polymer.

3. Method according to either of the preceding claims, **characterized in that** the UV-curable composition, based on its total weight, comprises 60 to 75 parts by weight of epoxy resin.

4. Method according to any of the preceding claims, **characterized in that** the matrix polymer is selected from the group consisting of styrene copolymers, acrylate copolymers, methacrylate copolymers, thermoplastic polyurethanes, copolyesters, copolyamides and ethylenevinyl acetate copolymers and mixtures thereof.

5. Method according to any of the preceding claims, **characterized in that** the epoxy resin is selected from the group consisting of 3,4-epoxycyclohexylmethyl 3`,4`-epoxycyclohexanecarboxylate (EEC) and derivatives, dicyclopentadiene dioxide and derivatives, 3-ethyl-3-oxetanemethanol and derivatives, diglycidyl tetrahydrophthalate and derivatives, diglycidyl hexahydrophthalate and derivatives, ethane 1,2-diglycidyl ether and derivatives, propane 1,3-diglycidyl ether and derivatives, 1,4-butanediol diglycidyl ether and derivatives, higher alkane 1,n-diglycidyl ethers and derivatives, bis[(3,4-epoxycyclohexyl)methyl] adipate and derivatives, vinylcyclohexyl dioxide and derivatives, 1,4-cyclohexanedimethanol bis(3,4-epoxycyclohexanecarboxylate) and derivatives, diglycidyl 4,5-epoxytetrahydrophthalate and derivatives, bis[1-ethyl(3-oxetanyl)methyl] ether and derivatives, pentaerythritol tetraglycidyl ether and derivatives, bisphenol A diglycidyl ether (DGEBA), hydrogenated bisphenol A diglycidyl ether, bisphenol F diglycidyl ether, hydrogenated bisphenol F diglycidyl ether, epoxyphenol novolacs, hydrogenated epoxyphenol novolacs, epoxycresol novolacs, hydrogenated epoxycresol novolacs, 2-(7-oxabicyclo[4.1.0]hept-3-yl);spiro[1,3-dioxane-5,3'-[7]oxabicyclo[4.1.0]heptane], 1,4-bis((2,3-epoxypropoxy)methyl)cyclohexane.

6. Method according to any of the preceding claims, **characterized in that** the carrier material is UV-transparent.

7. Method according to any of the preceding claims, **characterized in that** the carrier material comprises a polyester nonwoven.

8. Method according to Claim 1, **characterized in that** the UV radiation energy is supplied over a period of 0.5 sec to 6 min.

## Revendications

1. Procédé destiné à envelopper un produit allongé, tel qu'en particulier des fils ou des faisceaux de câbles, un ruban adhésif étant guidé selon une ligne hélicoïdale autour du produit allongé ou le produit allongé étant recouvert par le ruban adhésif dans la direction axiale, le produit allongé étant amené conjointement avec le ruban adhésif recouvrant dans l'agencement souhaité, en particulier dans le plan de faisceaux de câbles, le produit allongé étant maintenu dans cet agencement, la masse adhésive durcissable étant amenée à durcir par l'apport d'énergie de rayonnement UV, **caractérisé en ce que** le ruban adhésif comprend un support en forme de ruban, qui est pourvu sur au moins une face d'une couche adhésive, qui est constituée par une substance autoadhésive, la substance autoadhésive étant une composition durcissable aux UV, comprenant, par rapport au poids total de la composition :
15 à 50 parties en poids de polymère de matrice ;
50 à 85 parties en poids de résine époxyde ;
0,1 à 3 parties en poids de photo-initiateur, le polymère de matrice formant un film autoporteur dans lequel la résine époxyde et le photo-initiateur sont incorporés.

2. Procédé selon la revendication 1, **caractérisé en ce que** la composition durcissable aux UV comprend, par rapport à son poids total, 20-40 parties en poids de polymère de matrice.

3. Procédé selon l'une quelconque des revendications précédentes, **caractérisé en ce que** la composition durcissable aux UV comprend, par rapport à son poids total, 60 à 75 parties en poids de résine époxyde.

4. Procédé selon l'une quelconque des revendications précédentes, **caractérisé en ce que** le polymère de matrice est choisi dans le groupe constitué par les copolymères de styrène, les copolymères d'acrylate, les copolymères de méthacrylate, les polyuréthanes thermoplastiques, les copolyesters, les copolyamides et les copolymères d'éthylène-acétate de vinyle et leurs mélanges.

5. Procédé selon l'une quelconque des revendications précédentes, **caractérisé en ce que** la résine époxyde est choisie dans le groupe constitué par le carboxylate de 3,4-époxycyclohexylméthyl-3,4'-époxycyclohexane (EEC) et ses dérivés, le dioxyde de dicyclopentadiène et ses dérivés, le 3-éthyl-3-oxétane-méthanol et ses dérivés, l'ester diglycidylique de l'acide tétrahydrophtalique et ses dérivés, l'ester diglycidylique de l'acide hexahydrophtalique et ses dérivés, le 1,2-éthanediglycidyléther et ses dérivés, le 1,3-propanediglycidyléther et ses dérivés, le 1,4-butanedioldiglycidyléther et ses dérivés, les 1,n-alcanediglycidyléthers supérieurs et leurs dérivés, l'adipate de bis-[(3, 4-époxycyclohexyl)méthyle] et ses dérivés, le dioxyde de vinylcyclohexyle et ses dérivés, le bis-(3,4-époxycyclohexanecarboxylate) de 1,4-cyclohexanediméthanol et ses dérivés, l'ester diglycidylique de l'acide 4,5-époxytétrahydrophtalique et ses dérivés, le bis-[1-éthyl(3-oxétanyl)méthyl)éther et ses dérivés, le pentaérythritoltétraglycidyléther et ses dérivés, le bisphénol-A-diglycidyléther (DGEBA), le bisphénol-A-diglycidyléther hydrogéné, le bisphénol-F-diglycidyléther, le bisphénol-F-diglycidyléther hydrogéné, la novolaque d'époxyphénol, la novolaque d'époxyphénol hydrogénée, la novolaque d'époxycrésol, la novolaque d'époxycrésol hydrogénée, le 2-(7-oxabicyclo[4.1.0]hept-3-yl)-;spiro[1,3-dioxane-5,3'-[7]oxabicyclo[4.1.0]-heptane], le 1,4-bis((2,3-époxypropoxy)-méthyl)cyclohexane.

6. Procédé selon l'une quelconque des revendications précédentes, **caractérisé en ce que** le matériau support est transparent aux UV.

7. Procédé selon l'une quelconque des revendications précédentes, **caractérisé en ce que** le matériau support comprend un non-tissé de polyester.

8. Procédé selon la revendication 1, **caractérisé en ce que** l'énergie de rayonnement UV est fournie sur une période de temps de 0,5 seconde à 6 minutes.
